# EUROPEAN PATENT SPECIFICATION

(11) **EP 1 198 142 B1**
(45) Date of publication and mention of the grant of the patent: **15.10.2008**
(21) Application number: 01120050.8
(22) Date of filing: 21.08.2001
(51) Int. Cl.: H04N 9/64, H04N 5/445

(54) **Apparatus for superimposing a Y,C components video signal and an OSD signal**
Vorrichtung zur Überlagerung eines Y,C-Videokomponentensignals mit einem OSD-Signal
Appareil capable de superposer un signal vidéo à composantes Y,C et un signal OSD

(30) Priority: 15.09.2000 EP 00402563
(43) Date of publication of application: 17.04.2002
(73) Proprietor: Thomson Licensing, 92100 Boulogne-Billancourt (FR)
(72) Inventor: Dumont, Frank, Singapore 269564 (SG); Tan, Chee Lam, Singapore 730520 (SG); Zhou, Qing Jin, Singapore 760829 (SG)
(74) Representative: Thies, Stephan

(56) References cited:
- PATENT ABSTRACTS OF JAPAN vol. 1999, no. 03, 31 March 1999 (1999-03-31) & JP 10 336603 A (SANYO ELECTRIC CO LTD), 18 December 1998 (1998-12-18)
- PATENT ABSTRACTS OF JAPAN vol. 018, no. 428 (E-1591), 10 August 1994 (1994-08-10) & JP 06 133240 A (SONY CORP), 13 May 1994 (1994-05-13)
- PATENT ABSTRACTS OF JAPAN vol. 014, no. 533 (E-1005), 22 November 1990 (1990-11-22) & JP 02 226893 A (HITACHI LTD;OTHERS: 01), 10 September 1990 (1990-09-10)

## Description

The invention relates to a video apparatus delivering video signals, notably S-Video signals.

S-Video signals are a possible representation of video sequences consisting of a luminance signal (generally referred to as Y) and of a chrominance signal (C). S-Video signals are for instance generated by a S-VHS video cassette recorder (VCR) or by a DVD player having a S-Video output.

It is always desirable to superimpose images or characters, for instance menus, on the video sequence delivered by the video apparatus : this superimposition is called On-Screen Display (OSD) and is usually sent out of the video apparatus (for instance to a display) as three monochrome signals (RGB format) through a Scart connector.

Two solutions have already been proposed to output the S-Video signals :
- in a first solution, a dedicated S-Video connector is used ;
- according to a second solution, two pairs of pins of the Scart connector are used, specifically the pins conventionally used for the CVBS signal and the pins conventionally used for the red monochrome signal (R).
   With the first solution, as the video signal representing the video sequence goes through the S-Video connector, the video signal can be transmitted, for instance to a display, even when the Scart connector is not used. The user would then be unable to view the menus generated as OSD.
   When using the second solution, the conventional pins for the red monochrome signal are not available and the OSD cannot be displayed properly.
   It is desirable for a video apparatus to deliver a video signal which can also transmit OSD information in any circumstance.
   Figure 3 of patent publication JP 10 - 336 603 A proposes a video apparatus delivering YUV signals wherein a YUV signal representing an OSD picture is superimposed on a YUV signal from a NTSC source by an analog switch. However, this solution needs using an OSD circuit generating a YUV signal (or a signal easily convertible to YUV), which is not conventional ; or, when using a conventional OSD circuit generating analogue RGB signals, a costly dedicated RGB to YUV converter must be provided in addition.
   The invention aims at providing a video apparatus delivering video signals wherein OSD superimposition is realised in a cheap way regardless of the used OSD circuit, while keeping at the same time a good quality of superimposition, i.e. for instance without any colour hue.
   The invention proposes a video apparatus as claimed in claim 1, comprising a video source with a luminance output carrying a first luminance signal, an OSD circuit generating OSD signals and a fast-blanking signal, and a connector for delivering video signals, wherein a converter outputs a second luminance signal based on the OSD signals, wherein a first switch controlled by the fast-blanking signal selectively connects the converter or the luminance output to the connector, wherein the video source has a chrominance output carrying a chrominance signal and wherein a second switch controlled by the fast-blanking signal selectively connects the chrominance output or a circuit generating a constant chrominance signal to the connector.
   According to further teachings,
- the constant chrominance signal is a constant voltage ;
- a voltage divider generates said constant voltage ;
- said OSD signals are three monochrome signals ;
- said converter is a resistor matrix network ;
- said connector delivers S-Video signals ;
- said connector is a Scart connector;
- said connector is a S-Video connector;
- said video source is a S-Video source.

The invention and other features thereof will be understood in the light of the following description made with reference to the attached drawings where :

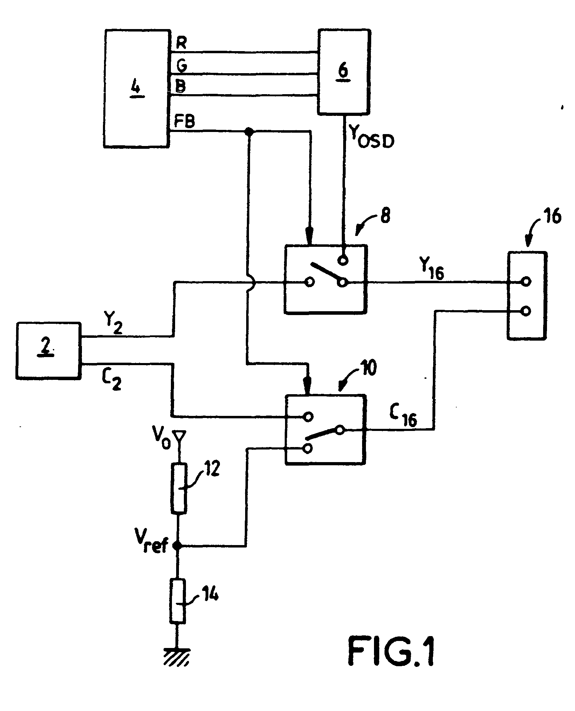

- figure 1 represents a video apparatus realised according to the teachings of the invention.

The video apparatus of figure 1 is a video cassette recorder (VCR) comprising a S-Video source 2 generating a first luminance signal Y₂ and a first chrominance signal C₂, defining a S-Video signal. In the present embodiment, the S-Video source 2 is a MPEG decoder STI5500 from ST fed by a bit-stream processor SAA6700H from Philips according to data read on a tape in a digital format, for instance D-VHS. According to a possible variation, the S-Video signal is provided by a conventional S-Video circuit of a S-VHS VCR.

The video apparatus also has an OSD circuit 4 generating three monochrome signals R, G and B (respectively red, green and blue monochrome signals) representing images to be superimposed on the video sequence of the S-Video signals. The OSD circuit also generates a fast-blanking signal FB indicating when the monochrome signals R, G and B should be taken into consideration.

Of course, the S-Video source 2 and the OSD circuit 4 co-operate in a conventional manner (not shown) in order to synchronise the fast-blanking signal FB (and thus the monochrome signals R, G and B) with the first luminance signal Y₂.

The monochrome signals R, G, and B are converted into a corresponding second luminance signal Y_{OSD} in a converter 6, which can for instance be a resistor matrix network. The second luminance signal Y_{OSD} thus represents a black-and-white image of the OSD to be inserted.

The first luminance signal Y₂ and the second luminance signal Y_{OSD} are respectively transmitted to a first input and to a second input of a first switch 8. The first switch 8 is controlled by the fast blanking signal FB to selectively output Y₂ or Y_{OSD} on a first pin of a connector 16.

More precisely, when the fast-blanking signal FB is at a low level (meaning no OSD insertion should be realised at this specific moment), the first switch 8 connects the S-Video source 2 to the connector 16 concerning luminance. When the fast-blanking signal FB is at a high level, the first switch 8 connects the OSD circuit 4 and converter 6 to the connector 16 to superimpose the balck-and-white image where needed.

The first switch 8 thus realises the actual OSD insertion.

A second switch 10 receives on a first pin the first chrominance signal C₂ and on a second pin a constant second chrominance signal V_{ref}. As indicated on figure 1, the second chrominance signal V_{ref} can be realised by a voltage divider comprising a first resistor 12 and a second resistor 14 in series with ground a constant voltage V₀ (for instance 5 V), the common point of the first and second resistors thus generating the second chrominance signal V_{ref}.

The second switch 12 is also controlled by the fast-blanking signal FB to selectively output the first chrominance signal C₂ or the second chrominance signal V_{ref} to a second pin of the connector 16.

More precisely, when the fast-blanking signal is at a low level, the second switch 10 connects the S-Video source 2 to the connector 16 for chrominance. When the fast-blanking signal is at a high level, the second switch 10 connects the voltage divider to the second pin (chrominance pin C₁₆) of the connector 16, thus setting the second pin of the connector 16 to a predetermined level indicating the signal to be superimposed is black-and-white.

Thanks to the second switch 10, the first chrominance signal C₂ is not used during OSD insertion ; this avoids an unpleasant color hue which would otherwise be present.

The connector 16 is meant to deliver at least the S-Video signal with OSD insertion to another video apparatus. It can be of any type, notably a conventional 4-pin S-Video connector or a Scart connector.

The invention also applies to other types of video apparatus delivering S-Video signals, for instance to DVD players having a S-Video output.

## Claims

1. Video apparatus comprising :
- a video source (2) with a luminance output (Y₂) carrying a first luminance signal and a chrominance output (C₂) carrying a chrominance signal,
- an OSD circuit (6) generating OSD signals (R, G, B) and a fast-blanking signal (FB),
- a connector (16) for delivering video signals,
- a converter (6) outputting a second luminance signal (Y_{OSD}) based on the OSD signals (R, G, B) and
- a first switch (8) controlled by the fast-blanking signal (FB) and selectively connecting the converter (6) or the luminance output (Y₂) to a first pin of the connector (16),
a second switch (10) controlled by the fast-blanking signal (FB) having an output connected to a second pin of the connector (16),
**characterised in that**
- the second switch (10) selectively connects the chrominance output (C₂) or a circuit (12, 14) generating a constant chrominance signal (V_{ref}) to the connector (16).

2. Video apparatus according to claim 1, wherein the constant chrominance signal is a constant voltage (V_{ref})

3. Video apparatus according to claim 1 or 2, comprising a voltage divider (12, 14) which generates said constant chrominance signal.

4. Video apparatus according to any of the preceding claims, wherein said OSD signals are three monochrome signals (R, G, B).

5. Video apparatus according to any of the preceding claims, wherein said converter (6) is a resistor matrix network.

6. Video apparatus according to any of the preceding claims, wherein said video source (2) delivers S-Video signals.

7. Video apparatus according to any of the preceding claims, wherein said connector (16) is a Scart connector.

8. Video apparatus according to claim 6, wherein said connector (16) is a S-Video connector.

## Patentansprüche

1. Videovorrichtung, umfassend:
- eine Videoquelle (2) mit einem Luminanzausgang (Y₂), der ein erstes Luminanzsignal führt, und einem Chrominanzausgang (C₂), der ein Chrominanzsignal führt,
- eine OSD-Schaltung (6), die OSD-Signale (R, G, B) und ein Fast-Blanking-Signal (FB) erzeugt,
- einen Verbinder (16) zum Abliefern von Videosignalen,
- einen Umsetzer (6) zum Ausgeben eines zweiten Luminanzsignals (Y_{OSD}) auf der Basis der OSD-Signale (R, G, B) und
- einen durch das Fast-Blanking-Signal (FB) gesteuerten ersten Schalter (8), der selektiv den Umsetzer (6) oder den Luminanzausgang (Y₂) mit einem ersten Anschluß des Verbinders (16) verbindet,
- einen durch das Fast-Blanking-Signal (FB) gesteuerten zweiten Schalter (10), der einen mit einem zweiten Anschluß des Verbinders (16) verbundenen Ausgang aufweist,
**dadurch gekennzeichnet, daß**
- der zweite Schalter (10) selektiv den Chrominanzausgang (C₂) oder eine Schaltung (12, 14), die ein konstantes Chrominanzsignal (V_{ref}) erzeugt, mit dem Verbinder (16) verbindet.

2. Videovorrichtung nach Anspruch 1, wobei das konstante Chrominanzsignal eine Konstantspannung (V_{ref}) ist.

3. Videovorrichtung nach Anspruch 1 oder 2 mit einem Spannungsteiler (12, 14), der das konstante Chrominanzsignal erzeugt.

4. Videovorrichtung nach einem der vorhergehenden Anspruche, wobei die OSD-Signale drei Monochromsignale (R, G, B) sind.

5. Videovorrichtung nach einem der vorhergehenden Ansprüche, wobei der Umsetzer (6) ein Widerstandsmatrix-Netzwerk ist.

6. Videovorrichtung nach einem der vorhergehenden Ansprüche, wobei die Videoquelle (2) S-Videosignale liefert.

7. Videovorrichtung nach einem der vorhergehenden Ansprüche, wobei der Verbinder (16) ein SCART-Verbinder ist.

8. Videovorrichtung nach Anspruch 6, wobei der Verbinder (16) ein S-Video-Verbinder ist.

## Revendications

1. Système vidéo comportant :
- une source vidéo (2) générant un signal de sortie de luminance (Y₂) porteur d'un premier signal de luminance et un signal de sortie de chrominance (C₂) porteur d'un signal de chrominance,
- un circuit OSD (On Screen Display - Visualisation sur écran) (6) générant des signaux OSD (R, V, B) et un signal d'effacement rapide (FB - Fast Blanking),
- un connecteur (16) pour délivrer des signaux vidéo,
- un convertisseur (6) qui génère en sortie un deuxième signal de luminance (Y_{OSD}) en fonction des signaux OSD (R, V, B) et
un premier commutateur (8) commandé par le signal FB et qui connecte sélectivement le convertisseur (6) à une première broche du connecteur (16) ou applique à cette dernière le signal de sortie de luminance (Y₂),
- un deuxième commutateur (10) commandé par le signal FB comportant une sortie connectée à une deuxième broche du connecteur (16),
**caractérisé en ce que**
- le deuxième commutateur (10) applique sélectivement le signal de sortie de chrominance (C₂) au connecteur (16) ou connecte ce dernier à un circuit (12, 16) qui génère un signal de chrominance constant (V_{ref}).

2. Système vidéo selon la revendication 1, dans lequel le signal de chrominance constant est une tension constante (V_{ref}).

3. Système vidéo selon la revendication 1 ou 2, comportant un diviseur de tension (12, 14) qui génère ledit signal de chrominance constant.

4. Système vidéo selon l'une quelconque des revendications précédentes, dans lequel lesdits signaux OSD sont trois signaux monochromes (R, V, B).

5. Système vidéo selon l'une quelconque des revendications précédentes, dans lequel ledit convertisseur (6) est un réseau matriciel de résistances.

6. Système vidéo selon l'une quelconque des revendications précédentes, dans lequel ladite source vidéo (2) génère des signaux de format S-Vidéo.

7. Système vidéo selon l'une quelconque des revendications précédentes, dans lequel ledit connecteur (16) est une prise de péritélévision.

8. Système vidéo selon la revendication 6, dans lequel ledit connecteur (16) est un connecteur pour signaux de format S-Vidéo.
